Europäisches Patentamt

European Patent Office

Office européen des brevets

(11) Veröffentlichungsnummer: **0 006 977**

**A1**

(12) # EUROPÄISCHE PATENTANMELDUNG

(21) Anmeldenummer: 79101235.4

(22) Anmeldetag: 24.04.79

(51) Int. Cl.³: **F 16 B 13/06**
**F 16 B 37/06**

(30) Priorität: 08.07.78 DE 2830072

(43) Veröffentlichungstag der Anmeldung:
23.01.80 Patentblatt 80/2

(84) Benannte Vertragsstaaten:
BE CH FR GB IT NL

(71) Anmelder: Artur Fischer Forschung
Weinhalde 14 - 18
D-7244 Waldachtal 3 (Tumlingen)(DE)

(72) Erfinder: Fischer, Artur, Dr.H.C.
Weinhalde 34
D-7244 Waldachtal 3/Tumlingen(DE)

(74) Vertreter: Jung, Eugen et al,
C/o Arthur Fischer Forschung Weinhalde 14 - 18
D-7244 Waldachtal 3 (Tumlingen)(DE)

(54) Schlagspreizdübel aus Metall.

(57) Die Erfindung betrifft einen Schlagspreizdübel aus Metall mit einem einen Spreizkonus (2) und Innengewinde (5) aufweisenden Bolzen (3), über den eine auf den Spreizkörper auftreibbare vom Einführende her geschlitzte Spreizhülse (1) gestülpt ist, die die dem Spreizkonus (2) gegenüberliegende Bolzenstirnseite um den Einschlagweb überragt, und hat zum Gegenstand, dass die Spreizhülse (1) aus zwei axial hintereinander angeordneten Hülsenteilen (1a, 1b) besteht, von denen das dem Einführende entgegengesetzt liegende Hülsenteil (1b) als Schlaghülse härter und das andere als Spreizhülse (1a) weicher ist.

**Fig. 1**

EP 0 006 977 A1

## Schlagspreizdübel aus Metall

Die Erfindung betrifft einen Schlagspreizdübel aus Metall mit einem einen Spreizkonus und Innengewinde aufweisenden Bolzen, über den eine auf den Spreizkörper auftreibbare, vom Einführende her geschlitzte Spreizhülse gestülpt ist, die die dem Spreizkonus gegenüberliegende Bolzenstirnseite um den Einschlagweg überragt.

Beim Einschlagen der Spreizhülse ist eine Verformung der rückwärtigen Stirnseite dieser Spreizhülse zu befürchten. Zur Vermeidung wurde schon vorgeschlagen, daß die Spreizhülse ausgehend von ihrem dem Einführende entgegengesetzten Ende über einen Teil ihrer Länge gehärtet ist. Diese wirksame Maßnahme hat jedoch herstellungstechnisch den Nachteil der teilweisen Wärmebehandlung der Hülse. Dies wirkt sich erschwerend auf den Fertigungsablauf hinsichtlich der Handhabung als auch der Herstellungsdauer aus.

Der Erfindung liegt die Aufgabe zugrunde, die Erfindung in dieser Hinsicht zu verbessern.

Erfindungsgemäß wird dies dadurch erreicht, daß die Spreizhülse aus zwei axial hintereinander angeordneten Hülsenteilen besteht, von denen das dem Einführende entgegengesetzt liegende Hülsenteil härter ist als das andere. Diese erfindungsgemäße Ausgestaltung ermöglicht in einfachster Weise die Herstellung der beiden Spreizhülsenteile aus unterschiedlichen Werkstoffen entsprechend den Anforderungen. So kann für das rückwärtige Spreizhülsenteil ein härterer Werkstoff als für das vordere verwendet werden. Dabei kann die Auswahl so getroffen werden, daß ggf. auch auf eine Wärmebeahandlung verzichtet werden kann, so daß ein zusätzlicher, zeitaufwendiger Arbeitsgang entfällt.

Nach einer ergänzenden Ausführungsform der Erfindung kann die Innenwandung des rückwärtigen Hülsenteils zum anderen Hülsenteil hin im Bereich der Stirnseite konisch erweitert sein. Dadurch kann ein Auftreiben des rückwärtigen auf das davorliegende Hülsenteil erreicht werden, wenn dieses vollkommen auf den Spreizkonus aufgetrieben ist. Dadurch ergibt sich eine zusätzliche Verspannung die eine Erhöhung der Auszugskräfte bewirkt.

In der Zeichnung ist ein Ausführungsbeispiel der Erfindung dargestellt.

Es zeigen:

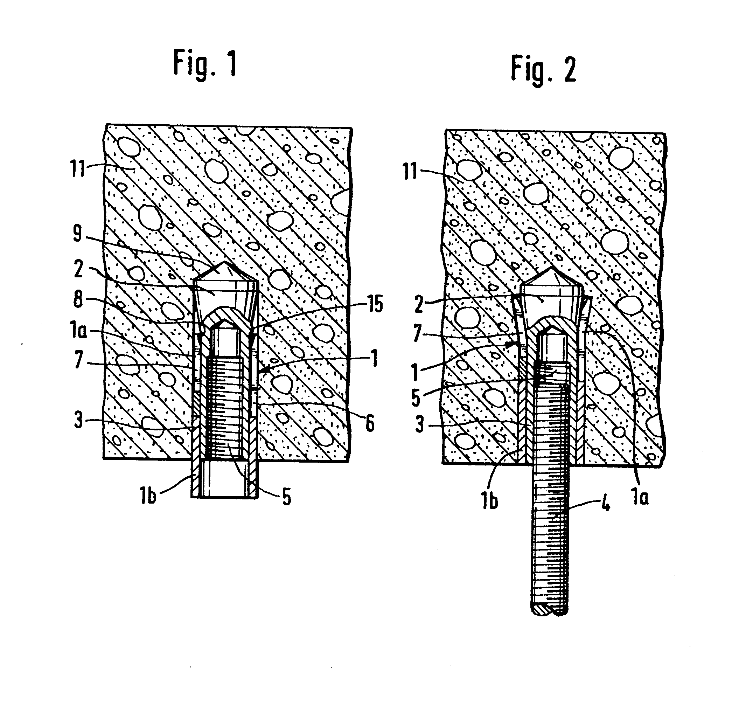

Figur 1    den im Bohrloch eingesetzten erfindungsgemäßen Schlag
           spreizdübel und

Figur 2    den Schlagspreizdübel nach Figur 1 im verankerten Zustand.

Der Schlagspreizdübel besteht aus einer Spreizhülse 1 und einem mit einem Spreizkonus 2 versehenen Bolzen 3, der zum Eindrehen einer Kopfschraube oder einer Gewindestange 4 ein Innengewinde 5 aufweist. Die Spreizhülse 1 besteht aus den beiden Spreizhülsenteilen 1 a, 1 b. Der Spreizhülsenteil 1 a ist längsgeschlitzt und wird vorzugsweise durch Ausstanzen aus einer Blechplatine und anschließendem Zusammenrollen zu einer Hülse gebildet, wobei ein durchgehender Schlitz 6 entsteht. Um das Auftreiben zu erleichtern, kann zweckmäßigerweise dem durchgehenden Schlitz gegenüber ein weiterer Schlitz 7 vorgesehen sein, der sich vom Einführende des Spreizhülsenteils 1 a über einen Teil deren Länge erstreckt. Ferner ist am Einführende dieses Spreizhülsenteil 1 a eine Anschrägung vorgesehen, die das Aufgleiten auf den Spreizkonus 2 des Bolzens erleichtert.

Zur Sicherung eines vorzeitigen Aufschiebens dieses Spreizhülsenteils 1 a auf den Spreizkonus 2 ist am Konusansatz ein Vorsprung 15 angeordnet, der beim Auftreiben des Spreizhülsenteils 1 a abgeschert wird.

Das Spreizhülsenteil 1 b ist aus einem härteren Material als das Spreizhülsenteil 1 a. Dies kann durch entsprechende Werkstoffwahl oder ein Härtungsverfahren erreicht werden. Das Spreizhülsenteil 1 b ist zweckmäßigerweise leicht klemmend auf dem Bolzen 3 angeordnet, so daß sich eine unverlierbare Verbindung aller Teile zu einer Schlagspreizdübel-Einheit ergibt. Die Länge des Spreizhülsenteils 1 a muß mindestens der Konuslänge entsprechen, zweckmäßigerweise wird jedoch eine etwas größere Länge gewählt. Die Länge des Spreizhülsenteils 1 b ergibt sich aus der Differenz zwischen Bolzenlänge (ohne Konus) und Eintreibweg einerseits sowie Länge des Spreizhülsenteiles 1 a. Der Eintreibweg entspricht in der Regel der Konuslänge + einem Sicherheitszuschlag.

artur fischer forschung    den 21. März 1979
Ju/Woe

EP 1386

P a t e n t a n s p r ü c h e

1. Schlagspreizdübel aus Metall mit einem einen Spreizkonus
und Innengewinde aufweisenden Bolzen, über den eine auf
den Spreizkörper auftreibbare vom Einführende her geschlitzte Spreizhülse gestülpt ist, die die dem Spreizkonus gegenüberliegende Bolzenstirnseite um den Einschlagweg überragt, dadurch gekennzeichnet, daß die Spreizhülse
aus zwei axial hintereinander angeordneten Hülsenteilen
besteht, von denen das dem Einführende entgegengesetzt
liegende Hülsenteil härter ist als das andere.

2. Schlagspreizdübel nach Anspruch 1, dadurch gekennzeichnet, daß die Innenwandung des rückwärtigen Hülsenteils
zum anderen Hülsenteil hin im Bereich der Stirnseite konisch erweitert ist.

0006977

# Fig. 1

# Fig. 2

**Europäisches Patentamt**

# EUROPÄISCHER RECHERCHENBERICHT

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | US - A - 1 850 768 (PEIRCE)  <br> * Seite 1, Zeilen 67-78,90-94 * | 1,2 | F 16 B 13/06 <br> 37/06 |
| X | US - A - 2 171 985 (STAR EXPANSION BOLT)  <br> * Seite 2, linke Spalte, Zeile 71 bis rechte Spalte, Zeile 21; Abbildungen 4,5,11,12 * | 1,2 | |

**RECHERCHIERTE SACHGEBIETE (Int. Cl.?)**

F 16 B 13/00
37/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-09-1979 | SEIFRIDSBERGER |

EPA form 1503.1 06.78